# EUROPÄISCHE PATENTANMELDUNG

(11) **EP 0 615 809 A2**
(43) Veröffentlichungstag der Anmeldung: **21.09.1994**
(21) Anmeldenummer: 94102132.1
(22) Anmeldetag: 11.02.1994
(51) Int. Cl.: B23K 9/16

(54) **Schutzgas-Schweissgerät**

(30) Priorität: 17.03.1993 DE 4308403
(71) Anmelder: Götz, Ottmar, D-97199 Ochsenfurt (DE)
(72) Erfinder: Götz, Ottmar, D-97199 Ochsenfurt (DE)
(74) Vertreter: Pöhner, Wilfried Anton, Dr.

(57) **Zusammenfassung**

Die Erfindung bezieht sich auf ein Schutzgas-Schweißgerät mit einer Gasversorgung, einer Schweißdrahtvorschubvorrichtung (17) und einer Stromquelle (18), und empfiehlt, daß in der Gasversorgung ein Sensor (9) angeordnet ist und daß eine Unterschreitung eines Schwellenwertes des Druckes und/oder des Durchflusses des Gases die Schweißdrahtvorschubvorrichtung (17) und/oder die Stromquelle (18) durch den Sensor abschaltet.

## Beschreibung

Die Erfindung bezieht sich auf ein Gas-Schweißgerät mit einer Gasversorgung, einer Schweißdrahtvorschubvorrichtung und einer Stromquelle.

Zum Verbinden zweier Metallstücke sind verschiedene Schweißverfahren bekannt, bei denen ein Gasstrom eine Oxidation der Schweißnaht verhindert oder den Schweißvorgang unterstützt. Beispielsweise werden das Wolfram-Inertgas-Schweißen (WIG), das Metall-Aktivgas-Schweißen (MAC) und das Metall-Inertgas-Schweißen (MIG) häufig eingesetzt. Diese weit verbreiteten Verfahren verwenden einen gegenüber dem Werkstück elektrisch vorgespannten Schweißdraht, der bei einer Berührung des Werkstücks durch einen Lichtbogen so stark erhitzt wird, daß er und das in seiner Nähe angeordnete Werkstück die Schmelztemperatur übersteigen, wodurch ein Aufschmelz- und Verbindungsvorgang beispielsweise zweier zusammengehefteter Werkstücke erfolgt.

Da die die geschmolzenen Metallflächen umgebende Luft die Oxidation begünstigt und die Festigkeit der Schweißnaht reduziert, werden beim Wolfram-Inertgas- und beim Metall-Inertgas-Schweißen Edelgase wie Argon oder Helium als Schutzgase verwendet und verhindern, da sie die Schweißstelle umspülen, eine Oxidation. Beim Metall-Aktivgas-Schweißen tritt ein Aktivgas anstelle des Inertgases. Der Vorschub des sich beim Schweißvorgang durch Abschmelzen verkürzenden Schweißdrahtes erfolgt gewöhnlich durch eine elektromotorisch betriebene Schweißdrahtvorschubvorrichtung, während die Gasversorgung durch eine Druckflasche erfolgt (MAG- und MIG-Schweißverfahren). Beim WIG-Schweißen hingegen wird der zwischen einer nicht-abschmelzenden Elektrode und dem Werkstück mit einer Zündquelle erzeugte Lichtbogen nicht abgeschmolzen und der Schweißzusatzverkstoff von außen zugeführt.

Zum Erzielen einer haltbaren, fehlerfreien Schweißnaht ist eine ständige Anwesenheit des Gases erforderlich. Im Stande der Technik ist allerdings üblich, daß der Schweißer keine ständige Kontrolle über den Füllstand der Druckflasche ausübt. Deshalb entspricht es dem Regelfall, daß der Schweißvorgang so lange erfolgt, bis das Gas vollständig aufgebraucht ist, was im Endbereich der Naht zu einer unzulänglichen Qualität führt. Der Schweißer ist somit veranlaßt, die beeinträchtigte Naht auszuschleifen, die Druckflasche gegen eine vollständig gefüllte auszutauschen und die Naht anschließend erneut zu verschweißen. Ein weiterer Nachteil der konventionellen Schweißgeräte besteht darin, daß eine Kontrolle über den Füllstand der Flasche relativ schwierig ist, da die Restdruckanzeige des Manometers eine ungenaue Angabe über den Flascheninhalt darstellt.

Hiervon ausgehend liegt der Erfindung die Aufgabe zugrunde, ein Gas-Schweißgerät so zu gestalten, daß bei einer entleerten Gas-Druckflasche keine fehlerhaften Schweißnähte entstehen.

Erfindungsgemäß wird die Aufgabe dadurch gelöst, daß in der Gasversorgung ein Sensor angeordnet ist und daß eine Unterschreitung eines Schwellenwertes des Druckes und/oder des Durchflusses des Gases die Schweißdrahtvorschubvorrichtung und/oder die Stromquelle durch den Sensor abschaltet.

Der Kerngedanke der Erfindung besteht darin, den Schweißvorgang bei unzureichendem Gasdruck und/oder -fluß abzubrechen. Dazu ist in der Gasversorgung ein geeigneter, den Druck und/oder den Durchfluß des Gases messender Sensor angeordnet, der bei einem Unterschreiten eines festgelegten Schwellenwertes eine Abschaltung der Schweißdrahtvorschubvorrichtung und/oder der den Lichtbogen erzeugenden Stromquelle bewirkt. Ein angehaltener Schweißdraht schmilzt nur eine kurze Zeit weiter ab, bis die Entfernung zum Werkstück so groß ist, daß der Lichtbogen abreißt. Auch bei einer Abschaltung der Stromquelle wird der Schweißvorgang innerhalb kürzester Zeit unterbrochen und die Entstehung einer fehlerhaften Schweißnaht ist sicher verhindert. Ein den Durchfluß messender Sensor bestimmt das Volumen, das in einer Zeiteinheit eine Verbindungsleitung durchströmt, die entsprechende Teilchenzahl oder die mittlere Geschwindigkeit der Gasmoleküle oder -atome.

Bevorzugt ist, beim Wolfram-Inertgas-Schweißen den Schweißstrom zu unterbrechen, während beim Metall-Aktivgas-Schweißen und beim Metall-Inertgas-Schweißen empfohlen ist, die Stromquelle abzuschalten oder die Schweißdrahtvorschubvorrichtung außer Betrieb zu setzen. Ein Abschalten der Vorschubvorrichtung ist vorteilhaft, da ein erneuter Schweißvorgang ohne ein erneutes Positionieren des Schweißdrahtes möglicht ist. Die Anordnung des Sensors ist im Rahmen der Erfindung beliebig, sie kann in der Nähe des Druckminderers oder im Zuleitungsschlauch des Gases zur Schweißpistole erfolgen.

Die Vorteile der Erfindung bestehen insbesondere darin, daß ein nachträglicher Einbau in bestehende Anlagen ohne weiteres möglich und daß der zu ihrer Realisierung notwendige Aufwand gering ist. Das rechtzeitige, automatische Abbrechen des Schweißvorganges bewirkt stets eine einwandfreie Qualität der Schweißnaht; der Schweißer kann sich besser auf den Schweißvorgang konzentrieren, da eine ständige Kontrolle über den Füllstand der Druckflasche nicht mehr erforderlich ist.

Ein einfach aufgebauter Sensor zur Steuerung des Schweißvorganges verwendet eine im Gasbereich angeordnete Membran, die nur bei einer Überschreitung eines eingestellten Schwellenwertes des Gas-Druckes die Gegenkraft einer Feder überwindet und einen Schalter schließt, der seinerseits ein Inbetriebsetzen der Schweißdrahtvorschubvorrichtung und/oder der Stromquelle bewirkt. Bei einer Unterschreitung des vorgesehenen, zur Erzielung einer einwandfreien Qualität der Schweißnaht erforderlichen Gasdrucks überwindet die Membran die Gegenkraft der Feder nicht mehr, wodurch sich der Schalter öffnet und die Stromquelle und/oder die Schweißdrahtvorschubvorrichtung außer Betrieb gesetzt werden.

Eine empfohlene, betriebssichere elektronische Steuerung eines Schweißgeräts weist einen Tastschalter auf, der über ein elektromagnetisch oder elektropneumatisch gesteuertes Ventil die Gasversorgung aktiviert und einen Gasfluß ermöglicht. Der in der Gasversorgung angeordnete Durchfluß- und/oder Drucksensor ist an einem Eingang eines Und-Gatters angeschlossen, der zweite Eingang dieses Gatters ist mit dem Tastschalter verbunden und der Ausgang steuert die Schweißdrahtvorschubvorrichtung und/oder die Stromquelle.

Nach dem Schließen des Tastschalters und des im Sensor angeordneten Kontakts (bei Erreichen des erforderlichen Mindestdrucks und/oder -flusses) befinden sich beide Eingänge des Und-Gatters auf Eins, es erfolgt daher ein Inbetriebsetzen der Schweißdrahtvorschubvorrichtung und/oder der Stromquelle, der Schweißvorgang beginnt. Bei einer leeren Druckflasche unterschreitet der Gasdruck und/oder -fluß im Sensor den eingestellten Mindestwert, dieser Schalter öffnet, der entsprechende Eingang des Und-Gatters liegt auf Null, so daß ein Abschalten der Schweißdrahtvorschubvorrichtung und/oder der Stromquelle erfolgt. Ein Öffnen des Tastschalters setzt den anderen Eingang des Und-Gatters auf Null, so daß, wie im Stande der Technik üblich, der Gasfluß, die Schweißdrahtvorschubvorrichtung und/oder die Stromquelle abgeschaltet und der Schweißvorgang unterbrochen ist.

Eine Einsparung des Und-Gatters ist prinzipiell durch eine direkte Steuerung der Schweißdrahtvorschubvorrichtung und/oder der Stromquelle durch den Sensor möglich. Bei einer Betätigung des Tastschalters schließt aufgrund des Gasflusses und/oder - drucks der Schalter im Sensor und der Schweißvorgang beginnt; auch der Abschaltvorgang erfolgt durch ein Unterschreiten des Schwellenwerts und ein Öffnen des Tastschalters. Der Nachteil dieser vereinfachten Anordnung besteht darin, daß die Stromquelle und/oder die Schweißdrahtvorschubeinrichtung nach dem Öffnen des Tastschalters verzögert abgeschaltet werden, da der im Sensor angeordnete Schalter nach einem durch eine Öffnung des Tastschalters und Schließen des Ventils bedingten Druckabfall später öffnet. Aus Sicherheitsgründen ist daher die Realisation mit dem Und-Gatter bevorzugt.

Der Tastschalter ist zweckmäßigerweise an der Schweißpistole angeordnet, da er leicht und schnell erreichbar und eine Einhandbedienung des Schweißgeräts möglich ist.

Da insbesondere die zur Versorgung der Stromquelle benötigten Stromstärken sehr hoch sind, ist eine Steuerung der Schweißdrahtvorschubvorrichtung und/oder der Stromquelle durch Schütze empfohlen. Die Lebensdauer des im Sensor angeordneten Schalters ist verlängert, bzw. die vom Und-Gatter aufzubringende Stromstärke reduziert, da nur die geringen, vom Schütz benötigten Ströme zu schalten sind.

Weiterhin ist vorteilhaft, einen Drucksensor im Hochdruckbereich vor dem Druckminderer anzuordnen, da sich die Druckänderung bei einer entleerten Flasche in diesem Bereich bedeutend stärker auswirkt als nach dem Druckminderer. Somit ermöglicht dieser Sensor, das Schweißgerät bei einem präzise und reproduzierbar festgelegten Schwellenwert des Druckes außer Betrieb zu setzen.

Weitere Einzelheiten, Merkmale und Vorteile der Erfindung lassen sich dem nachfolgenden Beschreibungsteil entnehmen, in dem anhand der Zeichnungen ein Ausführungsbeispiel der Erfindung näher erläutert wird. Sie zeigen in schematischer Darstellung in
- Figur 1: einen Schnitt durch einen erfindungsgemäßen Drucksensor
- Figur 2: einen Prinzipschaltplan eines erfindungsgemäßen Schweißgeräts

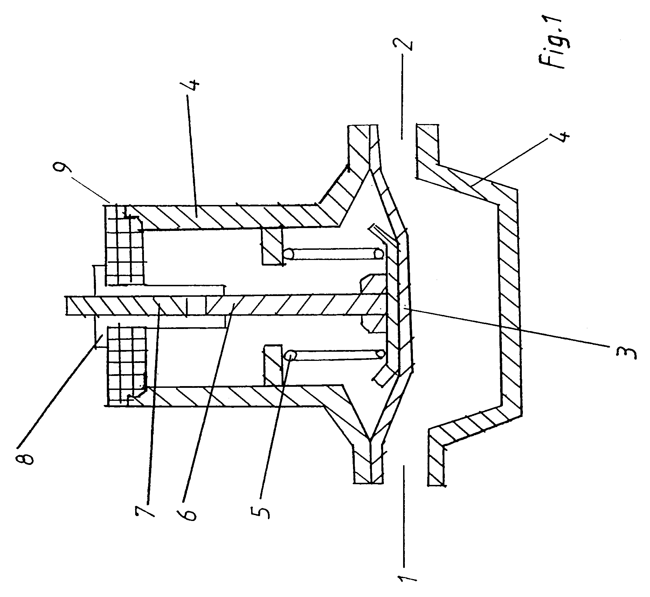

Der in Figur 1 dargestellte Sensor (9) weist eine Membran auf, die mit einem aus zwei Metallstäben (6,7) aufgebauten Kontakt verbunden ist. Falls Gas von der Druckflasche durch den Eingang (1) durch den mit der Membran (3) abgedichteten Raum zum Ausgang (2) zum Werkstück strömt, vergrößert sich der Gasdruck auf die Membran (3), so daß die resultierende Kraft die Gegenkraft der Schraubenfeder (5) überwindet und eine Aufwärtsbewegung des Metallstifts (6) bewirkt. Bei Überschreiten eines durch die Federkonstante und die Membranfläche bestimmten Schwellenwertes schließt sich der aus dem beweglichen, in einer Isolierhülse (8) angeordneten Stift (6) und dem ortsfesten Stift (7) aufgebaute Kontakt und der Schweißvorgang beginnt. Der Kontakt öffnet durch die Kraft der Schraubenfeder (5), falls der eingestellte Mindestdruck unterschritten ist, der Schweißvorgang ist unterbrochen. Das Gehäuse (4) schützt den Drucksensor (9) gegen Umgebungseinflüsse und verhindert Druckverluste des Gases.

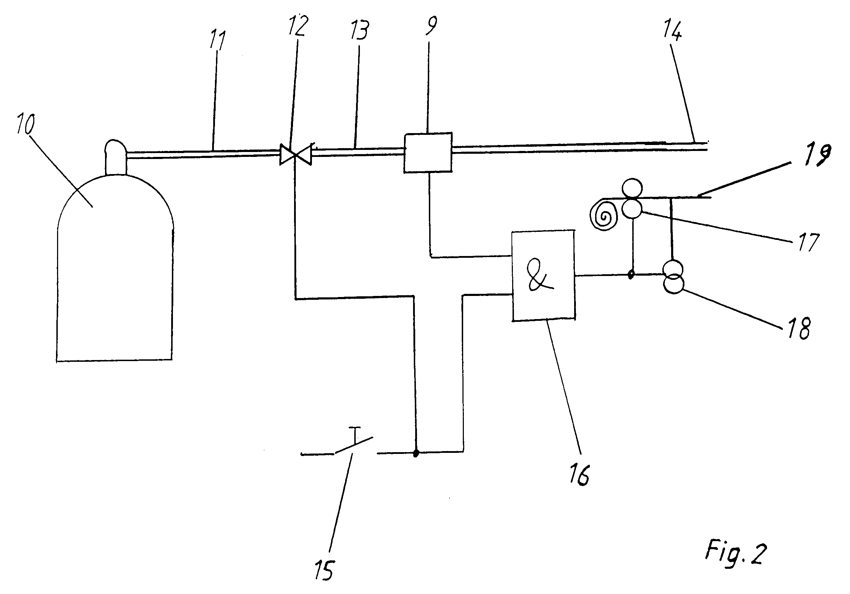

In Figur 2 ist ein Prinzipschaltbild eines erfindungsgemäßen Schweißgeräts dargestellt. Das Gas strömt aus der Druckflasche (10) durch eine Verbindungsleitung (11) und erreicht ein elektromagnetisch oder elektropneumatisch betätigtes Ventil (12). Falls dieses Ventil geöffnet ist, erreicht das Gas die Verbindungsleitung (13), den Drucksensor (9), und die auf das Werkstück gerichtete Düse (14). Ein zweckmäßigerweise an der Schweißpistole angeordneter Tastschalter (15) betätigt das Ventil (12) elektrisch, so daß Gas aus der Düse (14) ausströmt und der untere Eingang des Und-Gatters (16) auf Eins liegt. Der andere Eingang des Und-Gatters (16) ist mit dem Drucksensor (9) verbunden. Falls der eingestellte Mindestwert des Druckes erreicht ist, daher im Sensor (9) der Kontakt (6, 7) schließt, liegen beide Eingänge des Und-Gatters (16) auf Eins, so daß auch der Ausgang auf Eins liegt und die Schweißdrahtvorschubvorrichtung (17) und die einen Lichtbogen zwischen Schweißdraht (19) und Werkstück erzeugende Stromquelle (18) aktiviert. Bei einer Unterschreitung des für eine haltbare Schweißnaht notwendigen Mindestdrucks öffnet der im Sensor (9) angeordnete Schalter, so daß der obere Eingang des Und-Gatters (16) auf Null liegt, woraufhin auch sein Ausgang auf Null liegt und die Schweißdrahtvorschubvorrichtung (17) sowie die Spannungsquelle (18) abgeschaltet sind; der Schweißvorgang ist rechtzeitig abgebrochen, es entsteht keine durch Oxidation geschädigte, mit Blasen versehene Schweißnaht. Der Vorteil der Verwendung des Und-Gatters liegt darin, daß sofort nach Öffnen des Tastschalters (15) der Schweißvorgang unterbrochen wird.

## Patentansprüche

1. Gas-Schweißgerät mit einer Gasversorgung, einer Schweißdrahtvorschubvorrichtung und einer Stromquelle, **dadurch gekennzeichnet**, daß in der Gasversorgung ein Sensor (9) angeordnet ist und daß eine Unterschreitung eines Schwellenwertes des Druckes und/oder des Durchflusses des Gases die Schweißdrahtvorschubvorrichtung (17) und/oder die Stromquelle (18) durch den Sensor abschaltet.

2. Schweißgerät nach Anspruch 1, **dadurch gekennzeichnet,** daß der Sensor (9) eine im Gasbereich angeordnete Membran (3) aufweist und daß die Membran (3) bei einer Überschreitung eines Schwellenwertes des Drucks des Gases die Gegenkraft einer Feder (5) überwindet und einen Schalter (6, 7) betätigt.

3. Schweißgerät nach Anspruch 1 oder 2, **dadurch gekennzeichnet,** daß ein elektromagnetisch oder elektropneumatisch betätigtes Ventil (12) in der Gasversorgung angeordnet ist, daß das Ventil (12) durch einen Tastschalter (15) geöffnet wird, daß je ein Eingang eines Und-Gatters (16) mit dem Tastschalter (15) und dem Sensor (9) verbunden ist und daß das Und-Gatter (16) die Schweißdrahtvorschubvorrichtung (17) und/oder die Stromquelle aktiviert.

4. Schweißgerät nach Anspruch 3, **dadurch gekennzeichnet,** daß der Tastschalter (15) an der Schweiß-Pistole angeordnet ist.

5. Schweißgerät nach einem der Ansprüche 1 bis 4, **dadurch gekennzeichnet**, daß die Schweißdrahtvorschubvorrichtung (17) und/oder die Stromquelle (18) durch Schütze eingeschaltet werden.

6. Schweißgerät nach einem der Ansprüche 1 bis 5, **dadurch gekennzeichnet,** daß der Sensor (9) den Druck mißt und im Bereich vor dem Druckminderer angeordnet ist.
